(19) **Europäisches Patentamt**

**European Patent Office**

**Office européen des brevets**

(11) **EP 1 297 092 B1**

(12) **EUROPEAN PATENT SPECIFICATION**

(45) Date of publication and mention
of the grant of the patent:
**26.05.2004 Bulletin 2004/22**

(21) Application number: **01946598.8**

(22) Date of filing: **21.06.2001**

(51) Int Cl.⁷: **C09J 133/08**
// (C09J133/08, 133:06)

(86) International application number:
**PCT/US2001/019766**

(87) International publication number:
**WO 2002/000800 (03.01.2002 Gazette 2002/01)**

(54) **ACRYLIC ADHESIVE COMPOSITIONS COMPRISING ACRYLATE MICROSPHERES**

ACRYLKLEBEMITTELZUSAMMENSETZUNGEN ENTHALTEND ACRYLATMICROKUGELN

COMPOSITIONS ADHESIVES

(84) Designated Contracting States:
**AT BE CH CY DE DK ES FI FR GB GR IE IT LI LU MC NL PT SE TR**

(30) Priority: **23.06.2000 US 213862 P**

(43) Date of publication of application:
**02.04.2003 Bulletin 2003/14**

(73) Proprietor: **UCB S.A.**
**1070 Bruxelles (BE)**

(72) Inventors:
• **CHEN, Augustin, T.**
**Cheshire, CT 06410 (US)**
• **OJUNGA-ANDREW, Meshach**
**Springfield, MA 01109 (US)**
• **GUO, Jong-Shing**
**Longmeadow, MA 01106 (US)**

(74) Representative: **Albrecht, Thomas, Dr.**
**Kraus & Weisert,**
**Thomas-Wimmer-Ring 15**
**80539 München (DE)**

(56) References cited:
**EP-A- 0 439 941          WO-A-95/31225**
**WO-A-97/14510**

**Description**

Related Application

This application is a non-provisional application which claims the priority of prior provisional application serial number 60/213,862, entitled "Adhesive Compositions", filed June 23, 2000, which is hereby incorporated by reference into this application.

BACKGROUND OF THE INVENTION

This invention relates to aqueous pressure sensitive adhesive ("PSA") compositions and more particularly to such compositions that in dry form are removable or repositionable and adapted for use in conventional transfer coating processes.

Solid and hollow inherently tacky acrylate polymer microspheres are known in the art for use in repositionable pressure sensitive adhesive applications.

The term "repositionable" refers to the ability to be repeatedly adhered to and removed from a substrate without substantial loss of adhesion capability.

Coating such microsphere adhesives onto paper is typically done directly. However, coating water based adhesive onto paper often produces unsatisfactory results due to the distortion of the paper. This is avoided by using the well-known transfer coating process. In transfer coating processes using water-based adhesives, a continuous intermediate substrate layer usually containing a silicone release coating, i.e. the "release liner", is coated with the adhesive composition which is then dried on the intermediate substrate. The dried adhesive is then transferred from the intermediate substrate to the surface of another layer (usually called the "face stock") in a laminating step wherein the face stock, usually continuously, is placed on and forced against the dried adhesive so that when the two are separated the adhesive is transferred from the release liner to the face stock. However, because of the nature of the repositionable PSA microsphere beads, they do not transfer cleanly and consistently to the face stock but rather stay, at least partially, on the release liner.

U.S. 5,877,252 to Tsujimoto et al addresses the problem of transfer coating onto a paper face stock by including a binder with the microspheres in the water-based adhesive composition which is said to mechanically lock the microspheres together to facilitate the transfer to the final step substrate in a transfer coating process.

A need continues to exist in the art for water-based adhesive compositions containing PSA microspheres which can be readily transfer coated or direct coated to a broad range of both low surface energy and high surface energy face stock final substrate materials, or readily transfer coated to heat-sensitive or bulky backing materials that are difficult to handle in the drying oven and also require release liner to protect the adhesive.

SUMMARY OF THE INVENTON

Now, removable or repositionable water-based adhesive compositions containing PSA microspheres have been discovered which can be readily transfer coated.

Accordingly, a principal object of this invention is to provide transfer coatable aqueous adhesive PSA compositions.

Another object is to provide such compositions which can be tailored to accommodate a broad range of use applications requiring different adhesive strengths and use temperatures.

Other objects will in part be obvious and will in part appear from the following detailed description and claims.

According to the invention, an aqueous adhesive composition is provided comprising (a) from about 5 to about 75 weight % of an aqueous suspension of polymeric acrylate microspheres, (b) from about 25 to about 95 weight % of an aqueous emulsion of crosslinked acrylate polymer, and, optionally, (c) a functionally effective amount of one or more auxiliary ingredients for modifying coating or enhancing adhesive performance properties; wherein the weight ratio, on a solids basis, of microspheres to crosslinked acrylate polymer is about 0.025:1 to about 1.9:1.

Further according to the invention, an article is provided comprising a face stock material having coated thereon a removable or repositionable, pressure sensitive adhesive composition comprising (a) polymeric acrylate microspheres, (b) crosslinked acrylate polymer, and, optionally, (c) a functionally effective amount of one or more auxiliary ingredients for modifying coating or enhancing adhesive performance properties; wherein the weight ratio of microspheres to crosslinked acrylate polymer is about 0.025:1 to about 1.9:1.

BRIEF DESCRIPTION OF THE DRAWINGS

NOT APPLICABLE.

DETAILED DESCRIPTION OF THE INVENTION

This invention provides aqueous adhesive compositions useful as repositionable pressure sensitive adhesives in the production of removable and repositionable products on a variety of low surface energy and high surface energy face stocks, such as labels, note paper, tapes and the like. This invention also provides aqueous adhesive compositions that can be transfer coated to heat-sensitive or bulky backing materials that are difficult to handle in the drying oven and also require release liner to protect the adhesive.

The aqueous adhesive compositions of the invention can be transfer coated or direct coated onto the face stock material.

A first embodiment of the invention relates to an aqueous adhesive composition comprising (a) from about 5 to about 75 weight % of an aqueous suspension of polymeric acrylate microspheres, (b) from about 25 to about 95 weight % of an aqueous emulsion of crosslinked acrylate polymer, and, optionally, (c) a functionally effective amount of one or more auxiliary ingredients for modifying coating or enhancing adhesive performance properties; wherein the weight ratio, on a solids basis, of microspheres to crosslinked acrylate polymer is about 0.025:1 to about 1.9:1.

The polymeric acrylate microspheres that can be employed according to the invention include both solid and hollow microspheres. As used herein, the term "solid" means microspheres containing essentially no interior voids or internal cavities having a diameter greater than 10% of the diameter of the microsphere, although there may be a detectable number of hollow or hollow-appearing microspheres in the overall microsphere product. As used herein, the term "hollow" means microspheres containing at least one void or internal cavity having a diameter greater than 10% of the diameter of the microsphere.

Examples of suitable hollow microspheres and processes for their preparation are described in U.S. Patent Nos. 5,053,436 and 5,578,650, which are incorporated by reference herein in their entirety.

Suitable solid microspheres and the processes for their preparation are described in U.S. Patent No. 3,691,140, which is incorporated by reference herein in its entirety, and in the description below. Suitable solid microspheres can also be prepared in accordance with the process(es) described below and in the Examples.

The currently preferred polymeric acrylate microspheres are solid microspheres.

Solid polymeric pressure sensitive acrylate microspheres can be prepared by a suspension polymerization process comprising (a) contacting a polymerizable aqueous emulsion of at least one non-ionic monomer of an alkyl acrylate or alkyl methacrylate ester of a non-tertiary alcohol and at least one ionic monomer copolymerizable with the non-ionic monomer, and at least one non-free radically polymerizable acid, and (b) polymerizing the emulsion to form an aqueous suspension of the solid polymeric pressure sensitive adhesive microspheres; wherein the non-free radically polymerizable acid is contacted with the polymerizable aqueous emulsion prior to achieving about 95% conversion of said non-ionic monomer.

The polymerizable aqueous emulsion can be prepared by contacting water, at least one non-ionic monomer of an alkyl acrylate or alkyl methacrylate ester of a non-tertiary alcohol, at least one ionic monomer copolymerizable with the non-ionic monomer, and an emulsifier.

Alternatively, solid polymeric pressure sensitive acrylate microspheres can be prepared by a suspension polymerization process comprising (a) forming a polymerizable aqueous emulsion by contacting water, at least one non-ionic monomer of an alkyl acrylate or alkyl methacrylate ester of a non-tertiary alcohol, at least one ionic monomer copolymerizable with said non-ionic monomer, and at least one emulsifier, (b) initiating polymerization, (c) adding at least one non-free radically polymerizable acid, and (d) polymerizing the non-free radically polymerizable acid-containing mixture to form the solid polymeric pressure sensitive adhesive microspheres; wherein the non-free radically polymerizable acid is added to the polymerizable aqueous emulsion prior to achieving about 95% conversion of said non-ionic monomer.

Non-ionic monomers that can be employed include alkyl acrylate or alkyl methacrylate esters of a non-tertiary alcohol. The alkyl groups of the alkyl acrylate or alkyl methacrylate monomers are linear or branched alkyl radicals having from 4 to about 14 carbon atoms, preferably from 4 to about 10 carbon atoms, and more preferably from 4 to about 8 carbon atoms. Such acrylates and methacrylates are oleophilic, water emulsifiable, have restricted water solubility, and as homopolymers, generally have glass transition temperatures below about - 20°C. Examples of this class of monomers include, but are not limited to, isooctyl acrylate, 4-methyl-2-pentyl acrylate, 2-methylbutyl acrylate, isoamyl acrylate, sec-butyl acrylate, n-butyl acrylate, 2-ethylhexyl acrylate, isodecyl methacrylate, isononyl acrylate, isodecyl acrylate, and the like, singly or in mixtures.

The currently preferred non-ionic monomers are 2-ethylhexyl acrylate, n-butyl acrylate, and mixtures thereof, with 2-ethylhexyl acrylate being most preferred.

Ionic monomers that can be employed are ionic monomers that are copolymerizable with the non-ionic monomer and that are water soluble and substantially oil-insoluble. By substantially oil-insoluble and water-soluble it is meant that the monomer has a solubility of less than 0.5% by weight and, a distribution ratio (D) at a given temperature (preferably 50°-65°C.), of solubility in the oil phase monomer to solubility in the aqueous phase of less than about 0.005, i.e.,

$$D = \frac{\text{Total concentration in organic layer}}{\text{Total concentration in aqueous layer}}$$

Such ionic monomers include alkali metal, ammonium or amine salts of an acid selected from a monoolefinic monocarboxylic acid, a monoolefinic dicarboxylic acid or mixtures thereof.

The preferred alkali metal salts are the sodium and potassium salts.

Suitable amine salts include the cations derived from any water-soluble amine-containing organic compound. Examples of suitable amine salts include, but are not limited to, cations represented by the formula $(R)_4N^+$ wherein each R is independently hydrogen, alkyl having 1-10 carbon atoms, aminoalkyl having 2-10 carbon atoms, or hydroxyalkyl having 2-10 carbon atoms, provided at least one of R is not hydrogen. $(R)_4N^+$ can be a primary, secondary or tertiary ammonium, or a quaternary ammonium. Preferably, the amine salt is triethanol-ammonium.

The currently preferred salts are the alkali metal and ammonium salts, with sodium and ammonium salts being most preferred.

Examples of suitable ionic monomers include, but are not limited to, the salts of acrylic acid, methacrylic acid, fumaric acid, maleic acid, itaconic acid, crotonic acid and mixtures thereof. The currently preferred acids are acrylic acid and methacrylic acid, with acrylic acid being most preferred.

The ionic monomers can be added directly to the polymerization reaction mixture or can be formed *in situ* by adding a monoolefinic monocarboxylic acid, a monoolefinic dicarboxylic acid or mixtures thereof and a compound selected from an alkali metal hydroxide, ammonium hydroxide or an amine. When the ionic monomer is formed *in situ,* the non-free radically polymerizable acid is contacted with the polymerizable aqueous emulsion after formation of the ionic monomer.

The composition of the copolymer microspheres can be expressed in terms of the amounts of non-ionic monomer and ionic monomer charged to the polymerization. The amount of non-ionic and ionic monomers charged can be expressed in terms of weight percent based on the total monomer charged to the polymerization. Broadly, the monomer charged will contain about 85 to about 99.5 weight percent non-ionic monomer and about 0.5 to about 15 weight percent ionic monomer, preferably about 90 to about 99.5 weight percent non-ionic monomer and about 0.5 to about 10 weight percent ionic monomer, and more preferably about 94 to about 98 weight percent non-ionic monomer and about 2 to about 6 weight percent ionic monomer.

Non-free radically polymerizable acids that can be employed include any of the numerous acids known in the art that are not free radically polymerizable.

Typically, acids that are not free radically polymerizable do not comprise carbon-carbon double bonds and may be either organic or inorganic. Examples of suitable non-free radically polymerizable acids include, but are not limited to, acetic acid, hexanoic acid, phenyl undecanoic acid, stearic acid, hydrochloric acid, sulfuric acid or mixtures thereof. Currently, the preferred non-free radically polymerizable acid is sulfuric acid due to the excellent results achieved therewith.

Broadly, the non-free radically polymerizable acid is provided in an amount sufficient to give a pH of less than about 6, preferably less than about 4, in the resulting polymerization reaction mixture as measured using a pH meter.

Except as provided above in the case where the ionic monomer is formed *in situ,* the non-free radically polymerizable acid can be added to the polymerization reaction mixture any time prior to achieving about 95% conversion, preferably about 90% conversion, of the non-ionic monomer. It is currently preferred to add the non-free radically polymerizable acid after initiation of the polymerization. For example, the non-free radically polymerizable acid can be added to the polymerization reaction mixture after achieving about 5% to about 15% conversion of the non-ionic monomer.

The polymerization reaction can be conducted in any conventional reaction vessel capable of a suspension polymerization. If the heat removal capability of the reaction vessel used in the polymerization is such that the exothermic nature of the reaction causes the temperature of the polymerization mixture to exceed the temperature of the heat transfer fluid used to control temperature, the period during which the temperature of the polymerization mixture exceeds the temperature of the heat transfer fluid used to control temperature is referred to herein as the "exotherm". When the polymerization is conducted in a polymerization vessel using a polymerization reaction temperature profile such as that described immediately above, it is preferred to add the non-free radically polymerizable acid during the exotherm for best adhesive transfer performance of the microspheres of the invention.

If the polymerization reaction vessel has sufficient heat removal capability such that an exotherm does not occur, it is currently preferred to add the non-free radically polymerizable acid after initiation of the polymerization.

The process(es) utilize at least one emulsifier in a concentration greater than the critical micelle concentration, defined as that minimum emulsifier concentration necessary for the formation of micelles. This concentration is slightly different for each emulsifier, usable concentrations typically ranging from about 0.0001 to about 3.0 moles/liter.

Emulsifiers, i.e. surfactants, that can be employed include anionic, nonionic, cationic, amphoteric emulsifiers and mixtures thereof. Anionic emulsifiers are currently preferred. Examples of suitable anionic emulsifiers include, but are not limited to, alkyl aryl sulfonates (e.g. sodium dodecylbenzene sulfonate), alkyl sulfates (e.g. sodium dodecyl sulfate, ammonium dodecyl sulfate), sulfates of ethoxylated alcohols (e.g. sodium lauryl ether sulfate), sulfates and sulfonates of ethoxylated alkylphenols (e.g. sodium salt of alkylaryl polyether sulfonates), sulfosuccinates (e.g. sodium dioctyl sulfosuccinate), diphenyl sulfonates (e.g. sodium dodecyl diphenyloxide disulfonate), and mixtures thereof. Examples of suitable nonionic emulsifiers include, but are not limited to, ethoxylated alcohols (e.g. ethoxylated oleyl alcohol), ethoxylated alkylphenols (e.g. nonylphenol ethoxylate), and mixtures thereof. Examples of suitable cationic emulsifiers include, but are not limited to, ethoxylated fatty amines (e.g. ethoxylated tallow amine).

The process(es) also utilize at least one oil-soluble, very low water soluble polymerization initiator. Oil-soluble, substantially water insoluble polymerization initiators are those which are normally acceptable for free radical polymerization of acrylate monomers and are well known in the art. The typical concentration of oil-soluble, substantially water insoluble polymerization initiators is about 0.1 weight percent to about 10 weight percent, preferably about 0.1 weight percent to about 5 weight percent of the total weight of the non-ionic and ionic monomers charged to the polymerization.

Oil-soluble, substantially water insoluble polymerization initiators that can be employed include azo compounds, peroxides, and the like, and mixtures thereof. Examples of azo compounds include, but are not limited to, 2,2'-azobisisobutyronitrile (VAZO 64 from E.I. duPont de Nemours and Company), 2,2'-azobis(2-methylbutyronitrile) (VAZO 67 from E.I. duPont de Nemours and Company), and mixtures thereof. Examples of peroxides include, but are not limited to, benzoyl peroxide (Cadet BPO from Akzo Nobel Chemicals Inc.), di-(2-ethylhexyl) peroxydicarbonate (Trigonox EHP from Akzo Nobel Chemicals Inc.), and mixtures thereof.

The oil-soluble, substantially water insoluble polymerization initiator can be added to the polymerizable aqueous emulsion and polymerization initiated before or after the non-free radically polymerizable acid is contacted with the polymerizable aqueous emulsion. It is currently preferred that the oil-soluble, substantially water insoluble polymerization initiator be added and polymerization initiated prior to contacting the non-free radically polymerizable acid with the polymerizable aqueous emulsion.

The polymerization can be initiated by any conventional method known to those skilled in the art, such as by application of heat or radiation. The method of initiation will be dependent on the oil-soluble, substantially water insoluble polymerization initiator used and will be readily apparent to those skilled in the art.

The process(es) optionally utilize at least one water soluble initiator. Such water soluble polymerization initiators are well known in the art. The water soluble polymerization initiators can be used alone or used in combination with one or more conventional reducing agents, such as bisulfites, metabisulfites, ascorbic acid, sodium formaldehyde sulfoxylate, ferrous sulfate, ferrous ammonium sulfate, ferric ethylenediamine-tetraacetic acid, and the like. The concentration of water soluble polymerization initiators utilized in the process(es) of the invention is the amount effective to further reduce the residual unconverted water soluble ionic monomer. Typically, the concentration of water soluble polymerization initiators is about 0.04 to about 5 weight percent, preferably about 0.05 to about 2 weight percent, of the total weight of the non-ionic and ionic monomers charged to the polymerization.

Water soluble polymerization initiators that can be employed include water soluble persulfates, peroxides, azo compounds and the like, and mixtures thereof. Examples of water soluble initiators include, but are not limited to, persulfates (e.g. potassium persulfate, and sodium persulfate), peroxides (e.g. hydrogen peroxide, and tert-butyl hydroperoxide), and azo compounds (e.g. 4,4'-azobis(4-cyano-pentanoic acid), V-501 from Wako Chemicals). Currently the preferred water soluble polymerization initiators are the persulfates, particularly potassium persulfate.

The water soluble polymerization initiator can be added to the polymerization mixture after achieving about 90%, preferably about 95%, conversion of the non-ionic monomer. When the polymerization is conducted in a polymerization vessel such that the exothermic nature of the reaction causes the temperature of the polymerization mixture to exceed the temperature of the heat transfer fluid used to control temperature, the water soluble polymerization initiator can be added after the exotherm.

Water is used to prepare the polymerizable aqueous emulsion utilized in the process(es). While not required, it is currently preferred to use water having low ionic content.

The polymerization temperature will be dependent on the choice of oil-soluble, substantially water insoluble polymerization initiator and the method of initiation, and will be readily apparent to those skilled in the art.

For example, when benzoyl peroxide is used as the oil-soluble, substantially water insoluble polymerization initiator, the polymerization temperature is typically in the range of about 60°C to about 90°C.

The polymerization time is that time needed to achieve the desired conversion based on the other reaction conditions, e.g. temperature profile, and reaction components, e.g. monomers, initiator, etc. The polymerization time will be readily apparent to those skilled in the art.

The polymerization is preferably conducted at atmospheric pressure under an inert atmosphere. Suitable inert gases include nitrogen, argon, carbon dioxide, helium, krypton, xenon, and neon, with nitrogen being preferred. However, the polymerization can be conducted at elevated pressure if desired. While the polymerization could be conducted under an oxygen-containing atmosphere, this is not preferred since the presence of oxygen inhibits polymerization. If the polymerization mixture contains oxygen, it must be expelled or consumed before the polymerization reaction can initiate.

Following polymerization, the aqueous suspension of copolymer microspheres is stable to agglomeration or coagulation under room temperature conditions. The copolymer microsphere suspensions typically have solids content of from about 10 to about 50 weight percent, preferably about 20 to about 40 weight percent.

Shear, as induced by agitation, is used to effectively control particle size. It is presently preferred that sufficient shear be induced to provide microspheres having an average particle size smaller than about 200 μm, preferably smaller than about 100 μm, and more preferably about 15μm to about 50μm. When the level of shear is too high, there is tendency for the formed particles to be so fine that on application to a substrate at moderate coat weights it will perform like a continuous film. If the microspheres are too small, higher adhesions and adhesion buildup occurs. If shear is too low, particles of too great a size will be formed. If the microspheres are too large, increased adhesive transfer occurs. Preferably shear rates sufficient to provide microspheres having average particle size smaller than about 200 μm should be used.

Any conventional recovery technique known to those of skill in the art can be utilized to recover the microspheres or the aqueous dispersion of microspheres can be used directly from the final polymerization reaction mixture. It is currently preferred to directly use the aqueous dispersion of microspheres from the final polymerization reaction mixture to provide the aqueous suspension of polymeric acrylate microspheres for use in the inherently tacky pressure sensitive aqueous adhesive composition of the invention.

The aqueous emulsion of crosslinked acrylate polymer of the invention is a low glass-transition temperature ($T_g$) acrylic emulsion polymer. Broadly, the $T_g$ of the crosslinked acrylate polymer of the invention is less than 0°C, preferably from about -10°C to about -50°C. The crosslinked acrylate polymer emulsion can be prepared by any conventional free radical polymerization known to those skilled in the art.

The low $T_g$ acrylic emulsion polymer of the invention is the polymerization product of an alkyl acrylate monomer and an olefinically multifunctional monomer, optionally in the presence of other polymerizable monomers. The low $T_g$ acrylic emulsion polymer composition (based on the total monomer charged to the polymerization) is comprised of about 50 to about 99.9, preferably about 60 to about 98, weight percent alkyl acrylate monomer, about 0.1 to about 1, preferably about 0.15 to about 0.5, weight percent multifunctional monomer, and 0 to about 49.9, preferably about 1.5 to about 39.85, weight percent other polymerizable monomers.

The alkyl groups of the alkyl acrylate monomer are linear or branched alkyl radicals having from 4 to about 14 carbon atoms, preferably from 4 to about 10 carbon atoms, and more preferably from 4 to about 8 carbon atoms. Examples of this class of monomers include, but are not limited to, isooctyl acrylate, 4-methyl-2-pentyl acrylate, 2-methylbutyl acrylate, isoamyl acrylate, sec-butyl acrylate, n-butyl acrylate, n-hexyl acrylate, n-octyl acrylate, 2-ethylhexyl acrylate, n-decyl acrylate, isononyl acrylate, isodecyl acrylate, n-lauryl acrylate, and the like, singly or in mixtures.

The currently preferred alkyl acrylate monomers are 2-ethylhexyl acrylate, n-butyl acrylate, and mixtures thereof.

The multifunctional monomer is a crosslinking monomer selected from a group of multifunctional monomers including diacrylates, dimethacrylates, trimethacrylates, divinyl benzene, or monomers with multiple olefinic unsaturations that are reactive under the conditions of free radical emulsion polymerization.

Examples of suitable multifunctional monomers include, but are not limited to, ethylene glycol diacrylate, propylene glycol diacrylate, allyl methacrylate, glycidyl methacrylate, allylglycidyl ether alcohol, hexane diol diacrylate, ethylene glycol diacrylate, diethylene glycol dimethacrylate, 1,3 butane glycol dimethacrylate, pentaerythritol trimethacrylate, trimethylolpropane trimethacrylate, and mixtures thereof. The currently preferred multifunctional monomers are hexane diol diacrylate (HDDA) and allyl methacrylate.

Suitable other polymerizable monomers are selected from alkyl esters of methacrylic acid, styrene, allyl esters of unsaturated monocarboxylic acids, vinyl esters, vinyl ethers, hydroxyl containing alkyl esters of acrylic and methacrylic acid, dialkyl esters of monoethylenically unsaturated dicarboxylic acids, ethylenically unsaturated monocarboxylic and polycarboxylic acids and the anhydrides or nitriles. The currently preferred other polymerizable monomers are methyl methacrylate, vinyl acetate, and mixtures thereof.

The low $T_g$ acrylic emulsion polymer may be prepared in the presence of many surface-active components, such as nonionic and anionic surfactants.

Exemplary crosslinked acrylate polymer emulsions and the processes for their preparation are described in U.S. Patent Numbers 5,763,555 (Skoglund), 3,971,766 (Ono et al.), 3,998,997 (Mowdood et al.), 4,151,147 (Neuschwanter et al.), and 4,507,429 (Lenny), all of which are incorporated by reference herein in their entirety.

The weight percent solids of polymeric acrylate microspheres in the aqueous suspension of polymeric acrylate microspheres is from about 10 to about 50 weight percent, preferably about 20 to about 40 weight percent.

The weight percent solids of crosslinked acrylate polymer in the aqueous emulsion of crosslinked acrylate polymer is from about 40 to about 65 weight percent, preferably about 50 to about 60 weight percent.

The aqueous adhesive composition of the invention contains about 5 to about 75, preferably about 40 to about 75, weight % of an aqueous suspension of polymeric acrylate microspheres, and about 25 to about 95, preferably about 25 to about 60, weight % of an aqueous emulsion of crosslinked acrylate polymer. On a solids basis, the weight ratio of microspheres to crosslinked acrylate polymer is about 0.025:1 to about 1.9:1, preferably about 0.03:1 to about 1.6:1.

The optional auxiliary ingredients in the aqueous adhesive composition of the invention are selected from surfactants, defoaming agents, viscosity modifiers, neutralizing agents, flow control agents, stabilizers or tackifying agents. The preferred aqueous adhesive compositions of the invention contain at least one surfactant, at least one defoaming agent, at least one viscosity modifier, and at least one neutralizing agent.

When present in the aqueous adhesive compositions of the invention, the surfactants are present in an amount effective to lower surface energy/surface tension of the adhesive, especially for application on low energy surfaces, e. g. polyolefins and polyesters. When utilized, the concentration of surfactants is typically about 0.1 to about 1.15 weight percent, preferably about 0.2 to about 0.9 weight percent, of the total weight of the aqueous suspension of polymeric acrylate microspheres and the aqueous emulsion of crosslinked acrylate polymer.

Such surfactants are well known in the art. Examples of suitable surfactants include, but are not limited to, anionic surfactants such as olefin sulfonates, alkyl sulfates, sulfosuccinic acid esters, polyglycolether sulfates, and phosphates, nonionic surfactants such as nonylphenol ethoxylates, alkyl ethoxylates, alkoxylates, and mixtures thereof.

When present in the aqueous adhesive compositions of the invention, the defoaming agents are present in an amount effective to inhibit foaming. When utilized, the concentration of defoaming agents is typically about 0.05 to about 0.4 weight percent, preferably about 0.1 to about 0.25 weight percent, of the total weight of the aqueous suspension of polymeric acrylate microspheres and the aqueous emulsion of crosslinked acrylate polymer.

Such defoaming agents are well known in the art. Examples of suitable defoaming agents include, but are not limited to, fatty acid amides, esters, ester amides, polyalkylene glycols, organophosphates, metallic soaps of fatty acids, silicone oils, hydrophobic silica, and mixtures thereof.

When present in the aqueous adhesive compositions of the invention, the viscosity modifiers are present in an amount effective to increase viscosity of the aqueous adhesive compositions for processing requirements. When utilized, the concentration of viscosity modifier is typically about 1 to about 5 weight percent, preferably about 1.5 to about 4 weight percent, of the total weight of the aqueous suspension of polymeric acrylate microspheres and the aqueous emulsion of crosslinked acrylate polymer.

Such viscosity modifiers are well known in the art. Examples of suitable viscosity modifiers include, but are not limited to, alkali soluble or swellable acrylic emulsion copolymers, urethane block copolymers, cellulose derivatives, poly(ethylene oxide) polymers, polysaccharides, and mixtures thereof.

when present in the aqueous adhesive compositions of the invention, the neutralizing agents are present in an amount effective to adjust the pH of the aqueous adhesive compositions for processing requirements. When utilized, the concentration of neutralizing agent is typically about 0.1 to about 0.5 weight percent, preferably about 0.1 to about 0.35 weight percent, of the total weight of the aqueous suspension of polymeric acrylate microspheres and the aqueous emulsion of crosslinked acrylate polymer.

Such neutralizing agents are well known in the art. Examples of suitable neutralizing agents include, but are not limited to, alkali metal bases, amines such as ammonia, n-hexyl amine, monoethanol amine, 2-aminomethyl-1-propanol, hexamethylenediamine, and mixtures thereof.

When present in the aqueous adhesive compositions of the invention, the flow control agents are present in an amount effective to achieve improved leveling of the aqueous adhesive compositions during processing. When utilized, the concentration of flow control agent is typically about 0.25 to about 3 weight percent, preferably about 0.5 to about 2 weight percent, of the total weight of the aqueous suspension of polymeric acrylate microspheres and the aqueous emulsion of crosslinked acrylate polymer.

Such flow control agents are well known in the art. Examples of suitable flow control agents include, but are not limited to, acetylenic glycols, acrylic copolymers, carboxylic acid esters, polysiloxane polyether copolymers, and mixtures thereof.

When present in the aqueous adhesive compositions of the invention, the stabilizers are present in an amount effective to improve the stability of the adhesive compositions under use conditions. When utilized, the concentration of stabilizer is typically about 0.1 to about 1 weight percent, preferably about 0.1 to about 0.5 weight percent, of the total weight of the aqueous suspension of polymeric acrylate microspheres and the aqueous emulsion of crosslinked acrylate polymer.

Such stabilizers, e.g. UV stabilizers, are well known in the art. Examples of suitable stabilizers include, but are not limited to, Ultra Light Absorbers (UVA), Hindered Amine Light Stabilizers (HALS), Antioxidants (AO), and mixtures thereof.

When present in the aqueous adhesive compositions of the invention, the tackifying agents are present in an amount effective to increase the tackiness of the aqueous adhesive compositions. When utilized, the concentration of tackifying agent is typically about 5 to about 40 weight percent, preferably about 5 to about 25 weight percent, of the total weight of the aqueous suspension of polymeric acrylate microspheres and the aqueous emulsion of crosslinked acrylate polymer.

Such tackifying agents are well known in the art.

Examples of suitable tackifying agents include, but are not limited to, rosin esters, rosin acid, hydrocarbon resins, and mixtures thereof.

The aqueous adhesive compositions of the invention can be transfer coated onto a wide variety of face stock materials using conventional transfer coating processes that are well known in the art. Typical transfer coating processes are disclosed in Handbook of Pressure Sensitive Adhesive Technology, (Donatas Satas), Second Edition 1989. Van Nostrand Reinhold. Transfer coating is also used to apply the adhesive to heat-sensitive or bulky backing materials that are difficult to handle in the drying oven and also require release liner to protect the adhesive. In addition, the aqueous adhesive compositions of the invention can be direct coated onto a wide variety of face stock materials.

A second embodiment of the invention relates to an article is provided comprising a face stock material having coated thereon a removable or repositionable, pressure sensitive adhesive composition comprising (a) polymeric acrylate microspheres, (b) crosslinked acrylate polymer, and, optionally, (c) a functionally effective amount of one or more auxiliary ingredients for modifying coating or enhancing adhesive performance properties; wherein the weight ratio of microspheres to crosslinked acrylate polymer is about 0.025:1 to about 1.9:1.

Face stock materials that can be employed with the aqueous adhesive compositions of the invention in the preparation of face stock material having coated thereon the removable or repositionable, pressure sensitive adhesive composition of the invention, particularly by a transfer coating process, include both low surface energy and high surface energy face stock materials. Examples of suitable face stock materials include, but are not limited to, paper, polyolefins (e.g. polyethylene and polypropylene), polyesters (e.g. polyethylene terephthalate), polyurethanes, and plasticized polyvinyl chloride. The face stock materials are preferably flexible sheets or films.

The face stock material having coated thereon the removable or repositionable, pressure sensitive adhesive composition of the invention exhibit low peel adhesion with failure mode being essentially adhesive failure. The peel adhesion is dependent on the aqueous adhesive composition and the substrate. For example, when stainless steel is used as the substrate, the adhesive compositions of the invention exhibit dry film peel values of about 0.2 to about 2.5 pounds per inch peel force with adhesive failure mode.

EXAMPLES

**Example 1**

**Preparation of low Tg acrylic emulsion**

The emulsion was prepared by a typical free radical polymerization known in the art.

In the polymerization process, part of the water charge, surfactants (Aerosol NPES 3030, Triton X-305 and Aerosol OT), and the monomers (butyl acrylate/methyl methacrylate/vinyl acetate/acrylic acid/hexane diol diacrylate) were first mixed to form a thick, white pre-emulsion in a separate delay tank. A 2L polykettle was charged with the rest of the water, part of the Aerosol NPES 3030, the initiator (potassium persulfate), and the buffer (sodium bicarbonate). The jacket of the polykettle was heated until the polykettle mixture reached 79°C and then the pre-emulsion delay charge was started. The total delay charge period was 120 minutes. The reaction temperature was maintained at 82° C. At the end of the delay charge, the reaction was heated to 85°C during a 30 minute hold period. After the hold period, the reaction temperature was cooled to 55°C and the post redox initiator system was added. The batch was then cooled to room temperature where the other post adds were added.

| Reactor Charge | grams |
|---|---|
| a. Pre-emulsion | |
| Water | 160.211 |

(continued)

| Reactor Charge | grams |
|---|---|
| a. Pre-emulsion | |
| Aerosol NPES 3030[1] | 13.041 |
| Triton X - 305[2] | 1.401 |
| Aerosol OT 75[1] | 2.713 |
| Glacial Acrylic Acid | 3.899 |
| Vinyl Acetate | 0.274 |
| Methyl Methacrylate | 45.097 |
| Butyl Acrylate | 508.716 |
| HDDA (1,6-hexane diol diacrylate) | 1.734 |
| b. Initial Polykettle Charge | |
| Water | 235.550 |
| Aerosol NPES 3030[1] | 1.863 |
| Sodium Bicarbonate | 0.845 |
| Potassium Persulfate | 1.409 |
| c. Polykettle Postadds | |
| TBHP (70%)[3] | 0.296 |
| Parolite[4] | 0.262 |
| No Foam 1976[5] | 2.823 |
| | 1000.138 |

[1] Aerosol NPES 3030 , Aerosol OT 75 - commercially available from Cytec Industries

[2] Triton X-305 - commercially available from Union Carbide Corporation

[3] Trigonox AW70 - t-butyl hydroperoxide - commercially available from Akzo Nobel

[4] Parolite - commercially available from Diamond Shamrock Chemicals

[5] No Foam 1976 - commercially available from Oil Chem Technology Inc.

The resulting emulsion had a non-volatile content of 59.8 wt. %. The pH was 5.0 measured using a Cole Parmer pH/mV/C (pH 500 series) meter. Viscosity was 232 cps at 30 rpm determined using a Brookfield LV viscometer Model DV-11. The average particle size was 0.512 microns determined using a Horiba LA-910, Laser Scattering Particle Distribution Analyzer. The glass transition temperature ($T_g$) was determined to be -19.1°C using a Rheometrics Solids Analyzer (RSA II-1) in tensile mode from -50 to 60°C at a frequency of 10 Hz.

**Example 2**

**Preparation of acrylic polymeric beads**

Acrylic polymeric beads were prepared by aqueous suspension polymerization.

Example 2.1a

A two liter resin reactor equipped with a mechanical stirrer, a condenser, a thermocouple probe and a gas inlet port was charged with a solution of 740 grams of deionized water and 5 grams of acrylic acid (AA) neutralized with 5 grams of ammonium hydroxide (28%) to pH 8.5. In a separate container, 1.0 gram of benzoyl peroxide (BPO) [Cadet BPO-78 (78% active), Akzo Nobel Chemicals Inc.] was dissolved in 245 grams of 2-ethylhexyl acrylate (2-EHA) and then added to the reactor. The agitation was set at 320 rpm. The solution was purged with nitrogen for fifteen minutes after which the nitrogen line was repositioned above the fluid for the remainder of the reaction. Finally, 17.8 grams of ammonium dodecyl sulfate (ADS) [Rhodapon SB (30% solids solution), Rhone-Poulenc] were added to the reactor. After 15 minutes of mixing, the reaction mixture was heated to 65° C and held for the first hour. After a heating rate of approximately 2.2° C per minute, the reaction becomes exothermic after 20 minutes and subsided after 10 minutes. The reaction was heated to 77°C and held for the next two hours and then heated to 88° C and held for the final two hours. The reaction was cooled to room temperature and filtered through a 400 micron nylon mesh filter.

Example 2.1b

A two liter resin reactor equipped with a mechanical stirrer, a condenser, a thermocouple probe and a gas inlet port was charged with 750 grams of deionized water and 10 grams of ADS. The aqueous solution was stirred at 350 rpm and heated to 65°C. In a separate container, 1.0 grams of BPO was dissolved in 245 grams 2-EHA and 5 grams of acetic acid (HOAc - Sigma-Aldrich Co.). The mixture was added to the hot aqueous solution while stirring at 350 rpm. The pH was determined to be 2.9. The temperature of the reactor was reduced to a polymerization temperature of 60°C and the reactor was degassed with nitrogen. After 8 hours at 60°C, the reaction was cooled to 25°C and filtered through a 400 micron nylon mesh filter. Very little coagulum was found to be present.

Example 2.1c

Example 2.1a was repeated using the following monomers, catalyst and surfactants.

| Example/ Particle Morphology | Monomers | | Catalyst | | Surfactant |
|---|---|---|---|---|---|
| 2.1a / | 245g | 2-EHA | 1.0g | BPO | 17.8g ADS Solid |
| | 5g | AA | | | |
| 2.1b / Porous | 245g | 2-EHA | 1.0g | BPO | 10.0g ADS |
| | 5g | HOAc | | | |
| 2.1c / Solid | 300g | 2-EHA | 1.3g | BPO | 7g SDDS[2] |
| | 15g | HEA [1] | | | 3g APS[3] |
| | 5g | AA | | | |

[1] HEA = hydroxyethyl acrylate
[2] SDDS = sodium dodecyl diphenyloxide disulfonate (45% solution)
[3] APS = alkylene polyalkoxy sulfate (80% solution in 1,2-propanediol)

**Example 3**

**Formulation of transfer coatable PSA**

This example illustrates the method by which the adhesives of this invention were formulated for subsequent testing. To a 400 mL glass container, 100 grams of emulsion prepared according to the method described in Example 1, polymeric beads, surfactant, defoaming agent were added and stirred together. To this mixture, viscosity modifier was added slowly with stirring. The mixture was then neutralized to a pH between 6 to 8 using the neutralizing agent.

| | Grams |
|---|---|
| Polymeric Beads | 148.81 |
| Surfactant [1] | 0.65 |
| Defoaming agent[2] | 0.49 |
| Viscosity modifier[3] | 4.95 |
| Neutralizing agent [4] | 1.26 |
| Water | 1.73 |

[1] Surfactant - 75% solution; Aerosol® OT 75 -commercially available from Cytec Industries.
[2] Deforming agent - NoFoam 1976 - commercially available from Oil Chem Technologies, Inc.
[3] Viscosity modifier - Acusol@ 830 - commercially available from Rohm and Haas Company.
[4] Neutralizing agent - AMP 95™ - commercially available from Angus Chemical Company.

As shown in Table 1, samples 1 - 9 were formulated as described in this Example 3, using beads prepared according to Example 2.1c but different weight ratios of acrylic emulsion to polymeric beads were used.

Table 1

| Sample # | % Acrylic Emulsion | % Polymeric Beads |
|---|---|---|
| 1[b] | 5 | 95 |
| 2[b] | 10 | 90 |
| 3[b] | 20 | 80 |
| 4[a] | 25 | 75 |
| 5[a] | 40 | 60 |
| 6[a] | 50 | 50 |
| 7[a] | 90 | 10 |
| 8[a] | 95 | 5 |
| 9[b] | 0 | 100 |

[a] invention
[b] comparative

As shown in Table 2, samples 10 - 14 were formulated as described in this Example 3, but different weight ratios of acrylic emulsion to different polymeric beads were used. The beads were prepared as described in Examples 2.1a and 2.1b.

Table 2

| Samples # | % Acrylic Emulsion | % Polymeric Beads |
|---|---|---|
| 10 [b] | 10 | 90 |
| 11 [a] | 90 | 10 |
| 12[1,b] | 10 | 90 |
| 13[1,a] | 40 | 60 |
| 14[1,a] | 90 | 10 |

[1] hollow or porous polymeric beads
[a] invention
[b] comparative

As shown in Table 3, control samples using other commercially available emulsion binders were formulated as described in this Example 3 except the emulsion binders used were not the type of the invention. The beads were prepared as described in Example 2.1c. The emulsion binder used was Gelva® Multipolymer Emulsion 5628 available from Solutia Inc.

Table 3

| Samples # | % Emulsion Binder | % Polymeric Beads |
|---|---|---|
| 15[c] | 25 | 75 |
| 16 [c] | 40 | 60 |
| 17[c] | 50 | 50 |

[c] control

**Example 4**

**Preparation PSA laminate for property determination**

This example illustrates how laminates were prepared using the adhesives formulated as in Example 3, Tables 1, 2 and 3. A 0.7 - 0.8 mil thick dry film of the PSA composition was formed on a silicone treated release liner substrate (release paper 1-78 BCSCK-164, commercially available from DCP LOHJA Inc.) by depositing the emulsion on the silicone treated surface using a calibrated draw down bar followed by drying first at ambient temperature (~ 20°C) for 15 min and then drying with forced hot air at 90°C for 5 min.

**Example 5**

**Testing of PSA performance properties**

This example illustrates the performance of the adhesives formulated as in Example 3, Tables 1, 2 and 3.

Properties of formulated PSA compositions were measured according to the following procedure adopted from ASTM D 3330-98 /PSTC-1. Test laminates (with Mylar) containing PSA were cut into one inch (2.5 cm) strips, 5.5 inch (14 mm) long and the strips conditioned at 21° C, 50% R.H. for 24 hrs. The release paper was removed and the strips applied to a stainless steel plate (2 strips per plate) with an automated 4.5 lb (2.0 Kg) Pressure Sensitive Tape Council (PSTC) roll down apparatus, (12 in/min) once in both directions. The stainless steel test panels were held at CTH conditions of 21°C, 50% R.H. for 20 min, 24 hr and 72 hr and peel strength and adhesive failure mode determined. Average Peel strength in lb/in was determined on an Instron Test Machine (Model No. 1125) by peeling a strip from a plate at an 180° angle. In reporting results, the mode of the peel failure is identified as follows: "A" meaning adhesive failure, i.e. adhesive entirely separates from the substrate, "C" meaning cohesive failure where the adhesive is left half on the substrate and half on the face stock, "T" meaning transfer failure where the adhesive is all transferred to the substrate, or "G" meaning ghosting, i.e. a failure mode wherein some type of residue material from the adhesive is deposited on the surface of the test substrate that does not exhibit any significant degree of tackiness. Lower peel values with an "A" adhesive failure mode designates the desired performance that can be achieved using the adhesive compositions of the invention.

**Test Results:**

Table 4

| (examples from Table 1) | | | | |
|---|---|---|---|---|
| | TEST CONDITION @ CTH | | | |
| Sample # | Casting Appearance | 20min | 24 hr | 72 hr |
| 1[b] | Good | 0.70 91%A/9%T | 0.71 92%A/8%T | 0.46 60%A/40%T |
| 2[b] | Good | 0.4 A/G | 0.68 90%A/10%T | 0.55 80%A/20%T |
| 3[b] | Good | 0.60 A | 0.80 A/G | 0.28 A/G |
| 4[a] | Good | 0.96 A | 1.09 A | 1.15 A |
| 5[a] | Good | 0.89 A | 1.11 A | 0.80 A |
| 6[a] | Good | 1.03 A | 1.17 A | 1.16 A |
| 7[a] | Good | 0.74 A | 1.24 A | 1.07 A |
| 8[a] | Good | 0.9 A | 1.12 A | 1.10 A |
| 9[b] | Poor | -0.03 A | 0.21 A | 0.05 Hazy |

[a] invention
[b] comparative

Table 5

| (examples from Table 2) | | | | |
|---|---|---|---|---|
| | TEST CONDITION @CTH | | | |
| Sample # | Casting Appearance | 20min | 24 hr | 72 hr |
| 10[b] | Poor | - | - | - |
| 11[a] | Good | 1.02 A | 1.15 A | 1.39 A |

[a] invention
[b] comparative

Table 5   (continued)

| (examples from Table 2) | | | | |
|---|---|---|---|---|
| TEST CONDITION @**CTH** | | | | |
| Sample # | Casting Appearance | 20min | 24 hr | 72 hr |
| 12[1,b] | Poor | - | - | - |
| 13[1,a] | Poor | - | - | - |
| 14[1,a] | Good | 0.66 A | 1.28 A | 1.49 A |

[1] Hollow or porous polymeric beads.

[a] invention

[b] comparative

Table 6

| (examples from Table 3) | | | | |
|---|---|---|---|---|
| TEST CONDITION @ CTH | | | | |
| Sample # | Casting Appearance | 20min | 24 hr | 72 hr |
| 15[c] | Fair | 1.26 A | 2.09 93%A/7%T | 2.32 20%A/80%T/G |
| 16 [c] | Good | 1.73 A | 2.96 48%A/52%T | 2.88 T |
| 17 [c] | Fair | 2.18 A | 3.04 T 30%A/70%T | 2.86 |

[c] control

The results in Tables 4 and 5, samples 4-8, 11 and 14 clearly demonstrate that the adhesives of the invention possess excellent utility as a removable adhesive at all conditions tested. It is currently unclear why sample 13, Table 5 gave a poor casting appearance.

The results in Table 6 clearly demonstrate that using an emulsion binder outside the scope of the acrylate emulsions of the invention results in undesirable performance as the test panels were held over time.

As shown in Table 7, samples 18 - 20 were prepared and tested using adhesives prepared as described in example 3 using different weight ratios of acrylic emulsion to polymeric beads. The polymeric beads were solid and were prepared according to the procedure described in Example 2.1c. The acrylic emulsion was prepared according to the method described in Example 1.

## Table 7

| Sample # | Test Conditions/Substrates | | | | | |
|---|---|---|---|---|---|---|
| | 20 min. @ CTH | | 24 hrs. @ CTH | | 1 week @ CTH | |
| | SS | Glass | SS | Glass | SS | Glass |
| 18 | 0.87 A | 0.82 A | 1.11 A | 0.88 A | 1.53 A | 0.95 A |
| 19 | 0.20 A | 0.17 A | 0.49 A | 0.32 A | 0.67 A | 0.41 A |
| 20 | 0.88 A | 0.79 A | 1.22 A | 1.03 A | 1.24 A | 0.70 A |

```
Sample  18 - Acrylic Emulsion 33%, Beads 67%
Sample  19 - Acrylic Emulsion 40%, Beads 60%
Sample  20 - Acrylic Emulsion 50%, Beads 50%
```

The results in Table 7 further demonstrate that the adhesives of this invention possess excellent utility as a removable adhesive. The adhesive removability both initially and after being aged under different aging conditions is excellent. The invention provides a transfer coatable emulsion pressure sensitive adhesive that remains easily removable from a wide variety of substrates. The adhesive film possesses sufficient tack to anchor to the substrate, but will not build excessive bond thus allowing for easy removability.

## Claims

1. An aqueous adhesive composition for use in transfer coating the adhesive composition on a face stock material comprising:

    (a) from about 5 to about 75 weight % of an aqueous suspension of polymeric acrylate microspheres;
    (b) from about 25 to about 95 weight % of an aqueous emulsion of crosslinked acrylate polymer; and optionally,
    (c) a functionally effective amount of one or more auxiliary ingredients for modifying coating or enhancing adhesive performance properties;

    wherein the weight ratio, on a solids basis, of microspheres to crosslinked acrylate polymer is about 0.025:1 to about 1.9:1.

2. The composition of claim 1 comprising about 40 to about 75 weight % of said aqueous suspension of polymeric acrylate microspheres and about 25 to about 60 weight % of said aqueous emulsion of crosslinked acrylate polymer.

3. The composition of claim 1 wherein the weight ratio, on a solids basis, of microspheres to crosslinked acrylate polymer is about 0.03:1 to about 1.6:1.

4. The composition of claim 1 wherein said polymeric acrylate microspheres are solid.

5. The composition of claim 4 wherein said polymeric acrylate microspheres are produced by the process comprising:

    (a) contacting a polymerizable aqueous emulsion of at least one non-ionic monomer of an alkyl acrylate or alkyl methacrylate ester of a non-tertiary alcohol and at least one ionic monomer copolymerizable with said non-ionic monomer and at least one non-free radically polymerizable acid; and

(b) polymerizing the emulsion to form an aqueous suspension of said solid polymeric pressure sensitive adhesive microspheres;

wherein said non-free radically polymerizable acid is contacted with said polymerizable aqueous emulsion prior to achieving about 95% conversion of said non-ionic monomer.

6. The composition of claim 1 wherein said polymeric acrylate microspheres are hollow.

7. The composition of claim 1 wherein said crosslinked acrylate polymer has a $T_g$ of about -10°C to about -50°C.

8. The composition of claim 1 wherein said auxiliary ingredients are selected from surfactants, defoaming agents, viscosity modifiers, neutralizing agents, flow control agents, stabilizers or tackifying agents.

9. The composition of claim 8 wherein said aqueous adhesive composition contains at least one surfactant, at least one defoaming agent, at least one viscosity modifier, and at least one neutralizing agent.

10. The composition of claim 1 wherein the polymerized monomers of said polymeric acrylate microspheres comprises (a) about 85 to about 99.5 weight percent of at least one alkyl acrylate or alkyl methacrylate ester of a non-tertiary alcohol, wherein said alkyl group has from 4 to about 14 carbon atoms, and (b) about 0.5 to about 15 weight percent of an alkali metal, ammonium or amine salt of an acid selected from a monoolefinic monocarboxylic acid, a monoolefinic dicarboxylic acid or mixtures thereof.

11. The composition of any of claims 1, 5, 7 or 10 having dry film peel value of about 0.2 to about 2.5 pounds per inch peel force on stainless steel with adhesive failure mode.

12. An article comprising a face stock material having transfer coated thereon using a transfer coating process a removable or repositionable, pressure sensitive adhesive composition comprising: (a) polymeric acrylate microspheres, (b) crosslinked acrylate polymer, and, optionally, (c) a functionally effective amount of one or more auxiliary ingredients for modifying coating or enhancing adhesive performance properties; wherein the weight ratio of microspheres to crosslinked acrylate polymer is about 0.025:1 to about 1.9:1.

13. The article of claim 12 wherein the weight ratio, on a solids basis, of microspheres to crosslinked acrylate polymer is about 0.03:1 to about 1.6:1.

14. The article of claim 12 wherein said polymeric acrylate microspheres are solid.

15. The article of claim 14 wherein said polymeric acrylate microspheres are produced by the process comprising:

(a) contacting a polymerizable aqueous emulsion of at least one non-ionic monomer of an alkyl acrylate or alkyl methacrylate ester of a non-tertiary alcohol and at least one ionic monomer copolymerizable with said non-ionic monomer and at least one non-free radically polymerizable acid; and
(b) polymerizing the emulsion to form an aqueous suspension of said solid polymeric pressure sensitive adhesive microspheres;

wherein said non-free radically polymerizable acid is contacted with said polymerizable aqueous emulsion prior to achieving about 95% conversion of said non-ionic monomer.

16. The article of claim 12 wherein said polymeric acrylate microspheres are hollow.

17. The article of claim 12 wherein said crosslinked acrylate polymer has a $T_g$ of about -10°C to about -50°C.

18. The article of claim 12 wherein said auxiliary ingredients are selected from surfactants, defoaming agents, viscosity modifiers, neutralizing agents, flow control agents, stabilizers or tackifying agents.

19. The article of claim 18 wherein said aqueous adhesive composition contains at least one surfactant, at least one defoaming agent, at least one viscosity modifier, and at least one neutralizing agent.

20. The article of claim 12 wherein the polymerized monomers of said polymeric acrylate microspheres comprises (a) about 85 to about 99.5 weight percent of at least one alkyl acrylate or alkyl methacrylate ester of a non-tertiary alcohol, wherein said alkyl group has from 4 to about 14 carbon atoms, and (b) about 0.5 to about 15 weight percent of an alkali metal, ammonium or amine salt of an acid selected from a monoolefinic monocarboxylic acid, a monoolefinic dicarboxylic acid or mixtures thereof.

**21.** The article of any of claims 12, 15, 17 or 20 having dry film peel value of about 0.2 to about 2.5 pounds per inch peel force on stainless steel with adhesive failure mode.

**Patentansprüche**

**1.** Wässriges Klebemittel zur Verwendung beim Transferaufschichten des Klebemittels auf ein Face-stock-Material, umfassend:

(a) etwa 5 bis etwa 75 Gew.-% einer wässrigen Suspension von Mikrokügelchen aus einem Acrylatpolymeren;
(b) etwa 25 bis etwa 95 Gew.-% einer wässrigen Emulsion eines vernetzten Acrylatpolymeren; und gegebenenfalls
(c) eine funktionell wirksame Menge von einem oder mehreren Hilfsbestandteilen zur Modifizierung der Beschichtungseigenschaften oder zur Erhöhung der Klebeigenschaften,

wobei das Gewichtsverhältnis auf Feststoffbasis der Mikrokügelchen zu dem vernetzten Acrylatpolymeren etwa 0,025:1 bis etwa 1,9:1 beträgt.

**2.** Mittel nach Anspruch 1, umfassend etwa 40 bis etwa 75 Gew.-% der genannten wässrigen Suspension von Mikrokügelchen aus einem Acrylatpolymeren und etwa 25 bis etwa 60 Gew.-% der genannten wässrigen Emulsion des vernetzten Acrylatpolymeren.

**3.** Mittel nach Anspruch 1, wobei das Gewichtsverhältnis auf Feststoffbasis der Mikrokügelchen zu dem vernetzten Acrylatpolymeren etwa 0,03:1 bis etwa 1,6:1 beträgt.

**4.** Mittel nach Anspruch 1, wobei die genannten Mikrokügelchen aus einem Acrylatpolymeren fest sind.

**5.** Mittel nach Anspruch 4, wobei die Mikrokügelchen aus einem Acrylatpolymeren durch ein Verfahren hergestellt worden sind, welches Folgendes umfasst:

(a) die Kontaktierung einer polymerisierbaren wässrigen Emulsion von mindestens einem nichtionischen Monomeren eines Alkylacrylat- oder Alkylmethacrylatesters eines nicht-tertiären Alkohols mit mindestens einem ionischen Monomeren, das mit dem genannten nichtionischen Monomeren copolymerisierbar ist, und mindestens einer nicht durch freie Radikale polymerisierbaren Säure; und
(b) die Polymerisation der Emulsion zur Bildung einer wässrigen Suspension der genannten festen druckempfindlichen polymeren Klebemittel-Mikrokügelchen;

wobei die genannte nicht durch freie Radikale polymerisierbare Säure mit der genannten polymerisierbaren wässrigen Emulsion vor der Erreichung einer etwa 95%igen Umwandlung des genannten nichtionischen Monomeren kontaktiert wird.

**6.** Mittel nach Anspruch 1, wobei die genannten Mikrokügelchen aus dem Acrylatpolymeren hohl sind.

**7.** Mittel nach Anspruch 1, wobei das genannte vernetzte Acrylatpolymere einen $T_g$-Wert von etwa -10°C bis etwa -50°C hat.

**8.** Mittel nach Anspruch 1, wobei die genannten Hilfsbestandteile aus oberflächenaktiven Mitteln, Entschäumungsmitteln, Mitteln zur Modifizierung der Viskosität, Neutralisationsmitteln, Fließkontrollmitteln, Stabilisatoren oder Klebrigmachungsmitteln ausgewählt worden sind.

**9.** Mittel nach Anspruch 8, wobei das genannte wässrige Klebemittel mindestens ein oberflächenaktives Mittel, mindestens ein Entschäumungsmittel, mindestens ein Mittel zur Modifizierung der Viskosität und mindestens ein Neutralisationsmittel enthält.

**10.** Mittel nach Anspruch 1, wobei die polymerisierten Monomeren der genannten Mikrokügelchen aus dem Acrylatpolymeren (a) etwa 85 bis etwa 99,5 Gew.-% mindestens eines Alkylacrylat- oder Alkylmethacrylatesters eines nicht-tertiären Alkohols, wobei die genannte Alkylgruppe 4 bis etwa 14 Kohlenstoffatome hat, und (b) etwa 0,5 bis etwa 15 Gew.-% eines Alkalimetall-, Ammonium- oder Aminsalzes einer Säure, ausgewählt aus einer monoolefinischen Monocarbonsäure, einer monoolefinischen Dicarbonsäure oder Gemischen davon, umfasst.

**11.** Mittel nach einem der Ansprüche 1, 5, 7 oder 10 mit einem Abziehwert des trockenen Films von etwa 0,2 bis etwa 2,5 Pound pro Inch Abziehkraft auf Edelstahl nach dem Klebversagungsmodus.

**12.** Gegenstand, umfassend ein Face-stock-Material mit einem unter Verwendung eines Transferaufschichtungsverfahrens Transfer-aufgeschichteten entfernbaren oder wiederpositionierbaren druckempfindlichen Klebemittel darauf, umfassend: (a) Mikrokügelchen aus einem Acrylatpolymeren, (b) ein vernetztes Acrylatpolymer und gegebenenfalls (c) eine funktionell wirksame Menge von einem oder mehreren Hilfsbestandteilen zur Modifizierung der Beschichtungseigenschaften oder zur Erhöhung der Klebeigenschaften; wobei das Gewichtsverhältnis der Mikrokügelchen zu dem vernetzten Acrylatpolymeren etwa 0,025:1 bis etwa 1,9:1 beträgt.

**13.** Gegenstand nach Anspruch 12, wobei das Gewichtsverhältnis auf Feststoffbasis der Mikrokügelchen zu dem vernetzten Acrylatpolymeren etwa 0,03:1 bis etwa 1,6:1 beträgt.

**14.** Gegenstand nach Anspruch 12, wobei die genannten Mikrokügelchen aus einem Acrylatpolymeren fest sind.

**15.** Gegenstand nach Anspruch 14, wobei die Mikrokügelchen aus einem Acrylatpolymeren durch ein Verfahren hergestellt worden sind, welches Folgendes umfasst:

(a) die Kontaktierung einer polymerisierbaren wässrigen Emulsion von mindestens einem nichtionischen Monomeren eines Alkylacrylat- oder Alkylmethacrylatesters eines nicht-tertiären Alkohols und mit mindestens einem ionischen Monomeren, das mit dem genannten nichtionischen Monomeren copolymerisierbar ist, und mindestens einer nicht durch freie Radikale polymerisierbaren Säure; und
(b) die Polymerisation der Emulsion zur Bildung einer wässrigen Suspension der genannten festen druckempfindlichen polymeren Klebemittel-Mikrokügelchen;

wobei die genannte nicht durch freie Radikale polymerisierbare Säure mit der genannten polymerisierbaren wässrigen Emulsion vor der Erreichung einer etwa 95%igen Umwandlung des genannten nichtionischen Monomeren kontaktiert wird.

**16.** Gegenstand nach Anspruch 12, wobei die genannten Mikrokügelchen aus dem Acrylatpolymeren hohl sind.

**17.** Gegenstand nach Anspruch 12, wobei das genannte vernetzte Acrylatpolymere einen $T_g$-Wert von etwa -10°C bis etwa -50°C hat.

**18.** Gegenstand nach Anspruch 12, wobei die genannten Hilfsbestandteile aus oberflächenaktiven Mitteln, Entschäumungsmitteln, Mitteln zur Modifizierung der Viskosität, Neutralisationsmitteln, Fließkontrollmitteln, Stabilisatoren oder Klebrigmachungsmitteln ausgewählt worden sind.

**19.** Gegenstand nach Anspruch 18, wobei das genannte wässrige Klebemittel mindestens ein oberflächenaktives Mittel, mindestens ein Entschäumungsmittel, mindestens ein Mittel zur Modifizierung der Viskosität und mindestens ein Neutralisationsmittel enthält.

**20.** Gegenstand nach Anspruch 12, wobei die polymerisierten Monmeren der genannten Mikrokügelchen aus dem Acrylatpolymeren (a) etwa 85 bis etwa 99,5 Gew.-% mindestens eines Alkylacrylat- oder Alkylmethacrylatesters eines nicht-tertiären Alkohols, wobei die genannte Alkylgruppe 4 bis etwa 14 Kohlenstoffatome hat, und (b) etwa 0,5 bis etwa 15 Gew.-% eines Alkalimetall-, Ammonium- oder Aminsalzes einer Säure, ausgewählt aus einer monoolefinischen Monocarbonsäure, einer monoolefinischen Dicarbonsäure oder Gemischen davon, umfasst.

**21.** Gegenstand nach einem der Ansprüche 12, 15, 17 oder 20 mit einem Abziehwert des trockenen Films von etwa 0,2 bis etwa 2,5 Pound pro Inch Abziehkraft auf Edelstahl nach dem Klebversagungsmodus.

**Revendications**

1. Composition adhésive aqueuse à utiliser pour l'application par transfert de la composition adhésive sur la surface d'un substrat, comprenant :

   (a) environ 5 à environ 75 % en poids d'une suspension aqueuse de microsphères d'acrylate polymèrique ;
   (b) environ 25 à environ 95 % en poids d'une émulsion aqueuse de polymère d'acrylate réticulé et, le cas échéant,
   (c) une quantité fonctionnellement efficace d'un ou plusieurs ingrédients auxiliaires pour modifier le revêtement ou renforcer les propriétés de performance de l'adhésif ;

   dans laquelle le rapport en poids, sur la base des solides, des microsphères au polymère d'acrylate réticulé est d'environ 0,025:1 à environ 1,9:1.

2. Composition selon la revendication 1, comprenant environ 40 à environ 75 % en poids de ladite suspension aqueuse de microsphères d'acrylate polymère et environ 25 à environ 60 % en poids de ladite émulsion aqueuse de polymère d'acrylate réticulé.

3. Composition selon la revendication 1, dans laquelle le rapport en poids, sur la base des solides, des microsphères au polymère d'acrylate réticulé est d'environ 0,03:1 à environ 1,6:1.

4. Composition selon la revendication 1, dans laquelle lesdites microsphères d'acrylate polymérique sont solides.

5. Composition selon la revendication 4, dans laquelle lesdites microsphères d'acrylate polymérique sont produites au moyen du procédé comprenant les étapes de :

   (a) mise en contact d'une émulsion aqueuse polymérisable d'au moins un monomère non ionique d'un ester d'acrylate d'alkyle ou de méthacrylate d'alkyle d'un alcool non tertiaire et d'au moins un monomère ionique copolymérisable avec ledit monomère non ionique et d'au moins un acide non polymérisable par polymérisation radicalaire ; et
   (b) polymérisation de l'émulsion pour former une suspension aqueuse desdites microsphères polymériques solides d'adhésif sensible à la pression ;

   dans lequel ledit acide non polymérisable par polymérisation radicalaire est amené au contact de ladite émulsion aqueuse polymérisable avant l'obtention d'une conversion d'environ 95 % dudit monomère non ionique.

6. Composition selon la revendication 1, dans laquelle lesdites microsphères d'acrylate polymériques sont creuses.

7. Composition selon la revendication 1, dans laquelle ledit polymère d'acrylate réticulé a une $T_g$ d'environ -10°C à environ -50°C.

8. Composition selon la revendication 1, dans laquelle lesdits ingrédients auxiliaires sont choisis parmi des agents tensio-actifs, des agents antimousse, des agents de modification de la viscosité, des agents neutralisants, des agents maîtrisant l'écoulement, des stabilisants ou des agents de pégosité.

9. Composition selon la revendication 8, dans laquelle ladite composition aqueuse d'adhésif contient au moins un agent tensio-actif, au moins un agent antimousse, au moins un agent modifiant la viscosité et au moins un agent neutralisant.

10. Composition selon la revendication 1, dans laquelle les monomères polymérisés desdites microsphères d'acrylate polymérique comprennent (a) environ 85 à environ 99,5 % en poids d'au moins un ester d'acrylate d'alkyle ou de méthacrylate d'alkyle d'un alcool non tertiaire, ledit groupe alkyle ayant de 4 à environ 14 atomes de carbone, et (b) environ 0,5 à environ 15 % en poids d'un sel de métal alcalin, d'ammonium ou d'amine d'un acide choisi parmi un acide monocarboxylique monooléfinique, un acide dicarboxylique monooléfinique ou des mélanges de ceux-ci.

11. Composition selon l'une quelconque des revendications 1, 5, 7 ou 10, ayant une valeur de décollement du film à sec d'environ 0,2 à environ 2,5 livres par pouce de force de décollement sur de l'acier inoxydable en mode de défaillance de l'adhésif.

**12.** Article comprenant un substrat sur lequel est appliquée par transfert, en utilisant un procédé d'application par transfert, une composition d'adhésif sensible à la pression, amovible ou repositionnable, comprenant : (a) des microsphères d'acrylate polymérique, (b) un polymère d'acrylate réticulé et, le cas échéant, (c) une quantité fonctionnellement efficace d'un ou plusieurs ingrédients auxiliaires pour modifier le revêtement ou renforcer les propriétés de performance de l'adhésif ; dans lequel le rapport en poids des microsphères au polymère d'acrylate réticulé est d'environ 0,025:1 à environ 1,9:1.

**13.** Article selon la revendication 12, dans lequel le rapport en poids, sur la base des solides, des microsphères au polymère d'acrylate réticulé est d'environ 0,03:1 à environ 1,6:1.

**14.** Article selon la revendication 12, dans lequel lesdites microsphères d'acrylate polymère sont solides.

**15.** Article selon la revendication 14, dans lequel lesdites microsphères d'acrylate polymère sont produites au moyen du procédé comprenant les étapes de :

(a) mise en contact d'une émulsion aqueuse polymérisable d'au moins un monomère non ionique d'un ester d'acrylate d'alkyle ou de méthacrylate d'alkyle d'un alcool non tertiaire et d'au moins un monomère ionique copolymérisable avec ledit monomère non ionique et d'au moins un acide non polymérisable par polymérisation radicalaire ; et

(b) polymérisation de l'émulsion pour former une suspension aqueuse desdites microsphères polymériques solides d'adhésif sensible à la pression ;

dans lequel ledit acide non polymérisable par polymérisation radicalaire est amené au contact de ladite émulsion aqueuse polymérisable avant l'obtention d'une conversion d'environ 95 % dudit monomère non ionique.

**16.** Article selon la revendication 12, dans lequel lesdites microsphères d'acrylate polymérique sont creuses.

**17.** Article selon la revendication 12, dans lequel ledit polymère d'acrylate réticulé a une $T_g$ d'environ -10°C à environ -50°C.

**18.** Article selon la revendication 12, dans lequel lesdits ingrédients auxiliaires sont choisis parmi des agents tensio-actifs, des agents antimousse, des agents de modification de la viscosité, des agents neutralisants, des agents maîtrisant l'écoulement, des stabilisants ou des agents de pégosité.

**19.** Article selon la revendication 18, dans lequel ladite composition aqueuse d'adhésif contient au moins un agent tensio-actif, au moins un agent antimousse, au moins un agent modifiant la viscosité et au moins un agent neutralisant.

**20.** Article selon la revendication 12, dans lequel les monomères polymérisés desdites microsphères d'acrylate polymérique comprennent (a) environ 85 à environ 99,5 % en poids d'au moins un ester d'acrylate d'alkyle ou de méthacrylate d'alkyle d'un alcool non tertiaire, ledit groupe alkyle ayant de 4 à environ 14 atomes de carbone, et (b) environ 0,5 à environ 15 % en poids d'un sel de métal alcalin, d'ammonium ou d'amine d'un acide choisi parmi un acide monocarboxylique monooléfinique, un acide dicarboxylique monooléfinique ou des mélanges de ceux-ci.

**21.** Article selon l'une quelconque des revendications 12, 15, 17 ou 20, ayant une valeur de décollement du film à sec d'environ 0,2 à environ 2,5 livres par pouce de force de décollement sur de l'acier inoxydable en mode de défaillance de l'adhésif.